# EUROPEAN PATENT APPLICATION

(11) **EP 3 403 759 A1**
(43) Date of publication of application: **21.11.2018**
(21) Application number: 18172661.3
(22) Date of filing: 16.05.2018
(51) Int. Cl.: B23Q 1/66, B23Q 11/00, B23Q 11/08, B23Q 17/24, B23Q 39/02, F16P 3/12, F16P 3/14, B27M 1/08

(54) **A MACHINE TO PROCESS COMPONENTS OF WOOD OR THE LIKE**

(30) Priority: 16.05.2017 IT 201700052883
(71) Applicant: BIESSE S.p.A., 61100 Pesaro (IT)
(72) Inventor: ANDREATINI, Davide, 61121 PESARO (PU) (IT); CARROTTA, Alberto, 61100 PESARO (PU) (IT); TOSCANO, Giuseppe, 61100 PESARO (PU) (IT)
(74) Representative: Manconi, Stefano

(57) **Abstract**

A machine to process components (2) of wood or the like has a base (3), an overhead crane (20) movable along the base (3), and a protection barrier (10), which extends around a rear face (6) and two side faces (8) of the base (3), projects from a front face (5) of the base (3), so as to laterally limit an access zone (13) to the base (3), and has two front appendages (17), each of which prevents direct access to a side area (15, 16) of the access zone (13), so as to allow access exclusively through a central area (14) of the access zone (13).

## Description

### PRIORITY CLAIM

*This application claims priority from Italian Patent Application No.* 102017000052883 filed on 16/05/2017*.*

The present invention relates to a machine to process components of wood or the like.

In the field of processing components of wood or the like, it is known to provide a machine of the type comprising a base, which extends in a first direction and is limited by a front face and a rear face, opposite each other, and by two side faces, opposite each other; and an overhead crane, which extends above the base, in a second direction, transverse to the first direction, provided with an operating head to process the components.

The overhead crane is movable along the base in the first direction between two operating stations, each of which is provided with at least one gripping device, to hold at least one component, and alternatively defines a transfer station to transfer the components to/from the relative gripping device and a processing station to process the components by means of the operating head.

The machine is surrounded by a protection barrier, which extends around the rear face and the side faces of the base, and projects from the front face of the base, in the second direction, so as to laterally limit, in the first direction, an access zone to the base.

The access zone is surveyed by at least two video cameras, fitted inside the protection barrier, which are arranged at the sides of the access zone, facing each other in the first direction, so as to capture respective images of at least part of the access zone.

The access zone comprises a central area and two side areas, which are arranged on opposite sides of the central area, in the first direction.

Each video camera is able to correctly capture the images of the central area, it is unable to capture images of the side area adjacent thereto, and it is able to capture images of the side area adjacent to the other video camera.

As the images captured by each video camera of the side area, adjacent to the other video camera, have a relatively reduced reliability, the known machines described above for processing components of wood or the like, have various drawbacks principally deriving from the fact that the protection barrier and the two video cameras are unable to reliably control access by staff to the two side areas, and thus guarantee a correct level of safety of the machines.

It is an object of the present invention to provide a machine to process components of wood or the like, which is without the previously described drawbacks and which is cheap and easy to use.

According to the present invention, there is provided a machine to process components of wood or the like, as claimed in the appended claims.

The present invention will now be described with reference to the appended drawings, which illustrate a nonlimiting embodiment thereof, wherein:
Figure 1 is a schematic perspective view, with parts removed for clarity, of a preferred embodiment of the machine to process components of wood or the like of the present invention; and
Figures 2 and 3 are two schematic plan views, with parts removed for clarity, of the machine in figure 1 illustrated in two different operating positions.

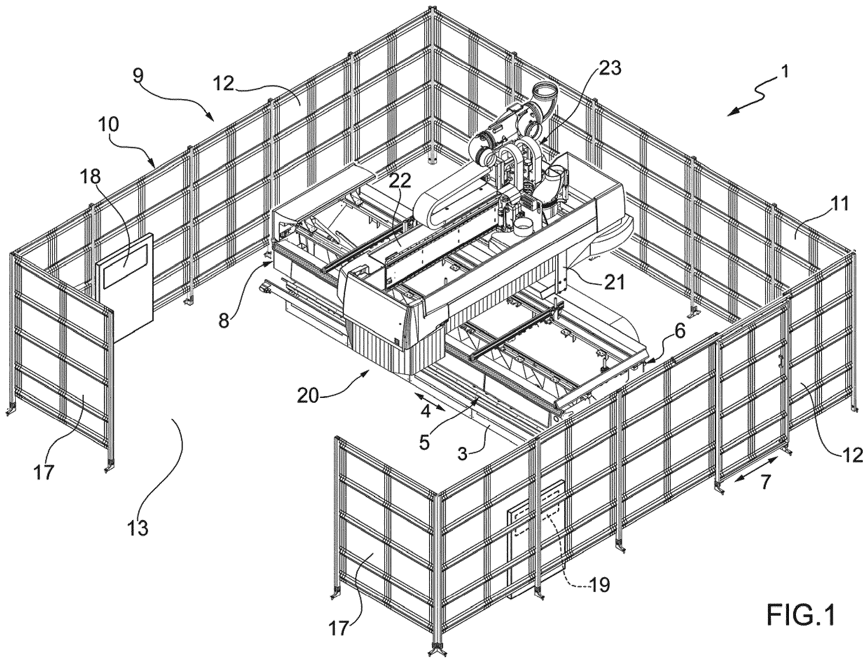

With reference to figures 1, 2, and 3, number 1 indicates, as a whole, a machine to process components of wood or the like defined, in this case, by panels 2 with a substantially flat and rectangular shape.

The machine 1 comprises an elongated base 3, which extends in a horizontal direction 4, it is limited by a front face 5 and a rear face 6, substantially parallel to each other and perpendicular to a horizontal direction 7, transverse to the direction 4, and it is further limited by two side faces 8, substantially parallel to each other and perpendicular to the faces 5, 6 and to the direction 4.

Access to the machine 1 is controlled by a security system 9 comprising a protection barrier 10, comprising, in turn, a rear wall 11, extending along the rear face 6, parallel to the face 6, and two side walls 12, extending along the side faces 8, parallel to the faces 8.

The two walls 12 project from the base 3 in the direction 7, so as to laterally limit, in the direction 4, an access zone 13 to the base 3.

The zone 13 comprises a central area 14 and two side areas 15, 16 obtained on opposite sides of the central area 14 in the direction 4.

Each side area 15, 16 extends between the central area 14 and a relative wall 12, and it is limited in the direction 7 by a front appendage 17, which extends parallel to the face 5 and perpendicularly to the direction 7, starting from the free end of a relative wall 12.

The two appendages 17 define, between each other, an entry point to the zone 13 and are arranged at a distance from each other, which is measured parallel to the direction 4 and rounds down a length of the central area 14, which is also measured parallel to the direction 4.

Consequently, the two appendages 17 prevent staff from directly accessing the two side areas 15, 16, allowing them access exclusively through the central area 14.

The system 9 further comprises, in this case, two video cameras 18, 19, fitted inside the barrier 10 and at the sides of the zone 13, arranged in the side areas 15 and 16, respectively, facing each other in the direction 4 to capture images of the zone 13.

According to a non-illustrated variation, the two video cameras 18, 19 are each eliminated and replaced with a respective video camera unit.

As regards the above, it should be specified that the technical features of the video cameras 18, 19 are such whereby:
each video camera 18, 19 is able to correctly capture the images of the central area 14;
each video camera 18, 19 is unable to capture the images of the side area 15, 16 adjacent thereto;
the video camera 18 is able to capture images of the side area 16 with relatively reduced reliability; and
the video camera 19 is able to capture images of the side area 15 with relatively reduced reliability.

Furthermore, the machine 1 comprises an overhead crane 20 comprising, in turn, a vertical column 21 coupled, in a known manner, to the base 3, to make rectilinear movements in the direction 4 along the base 3 and under the thrust of an actuating device, known and not illustrated.

The column 21 has, connected to a free end thereof, a horizontal cross rod 22, which extends above the base 3 in the direction 7, and supports an operating head 23 of a known type coupled, in a known manner, to the cross rod 22, to make rectilinear movements in the direction 7 along the cross rod 22.

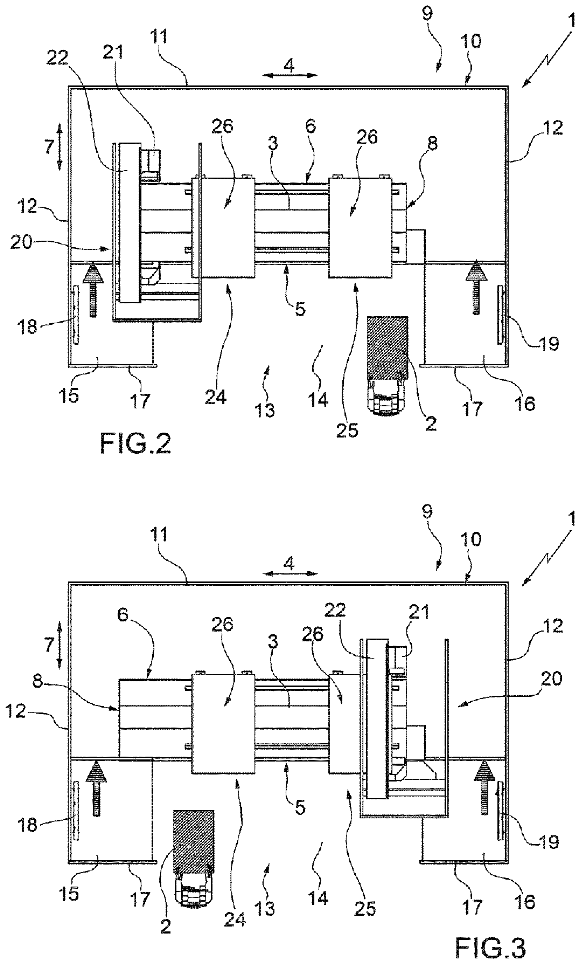

The overhead crane 20 projects inside the central area 14 in the direction 7, and is movable along the base 3 in the direction 4 between two end operating position (figures 2 and 3), in each of which the overhead crane 20 projects inside a relative side area 15, 16.

The machine 1 has further two operating stations 24, 25, which are obtained on the base 3, and comprise respective support planes 26, each configured to hold at least one respective panel 2.

Alternatively, each station 24, 25 defines a transfer station to transfer the panels 2 to/from the relative plane 26 and a processing station to process the panels 2 by means of the head 23.

In other words, when the overhead crane 20 and the head 23 are arranged in the station 24 (figure 2), the station 24 defines a station to process the panels 2 and the station 25 defines a station to load/unload the panels 2 to/from the relative support plane 26, whereas, when the overhead crane 20 and the head 23 are arranged in the station 25 (figure 3), the station 25 defines a station to process the panels 2 and the station 24 defines a station to load/unload the panels 2 to/from the relative support plane 26.

According to a non-illustrated variation, the barrier 10 further comprises two auxiliary walls, each of which is fitted between a relative side face 8 of the base 3 and a relative side wall 12 of the barrier 10, so as to limit access by staff exclusively to the zone 13.

Preferably, but not necessarily, the abovementioned auxiliary walls are shaped like openable gates, so as to allow staff to access spaces comprised between the base 3 and the barrier 10, different from zone 13, in given machine 1 operating conditions.

As the video cameras 18, 19 are able to capture the images of the central area 14 correctly, the machine 1 has various advantages principally deriving from the fact that the appendages 17, enabling staff to access the side areas 15, 16 exclusively through the central area 14, allow the security system 9 to detect the access of an operator in the whole access zone 13 correctly, in other words, both in the central area 14, and in the side areas 15, 16, and therefore control the slowing down and/or stopping of the overhead crane 20 in the direction 4 and/or of the operating head 23 in the direction 7.

## Claims

1. A machine to process components (2) of wood or the like comprising a base (3), which extends in a first direction (4), is provided with at least one gripping device (26), to hold at least one component (2), and has a front face (5) and a rear face (6) opposite each other and two side faces (8) opposite each other; an overhead crane (20), which extends above the base (3) in a second direction (7) transverse to the first direction (4), is provided with an operating head (23) to process the components (2), and is movable along the base (3) in the first direction (4); a protection barrier (10), which extends around the rear face (6) and the side faces (8) of the base (3), and projects from the front face (5) of the base (3) in the second direction (7), so as to laterally limit, in the first direction (4), an access zone (13) to the base (3); and at least two video cameras (18, 19), arranged at the sides of the access zone (13), facing each other in the first direction (4), to capture respective images of at least part of the access zone (13); the access zone (13) comprising a central area (14) and two side areas (15, 16) arranged on opposite sides of the central area (14) in the first direction (4); and **characterized in that** the protection barrier (10) is configured so as to prevent direct access to the two side areas (15, 16) and allow access exclusively through the central area (14).

2. The machine according to claim 1, wherein the protection barrier (10) comprises a rear wall (11) extending along the rear face (6), two side walls (12) extending along the side faces (8), and two front appendages (17) arranged so as to prevent direct access to the two side areas (15, 16) and allow access exclusively through the central area (14).

3. The machine according to claim 2, wherein the two side walls (12) of the protection barrier (10) are arranged at a distance from each other, which is greater than a length of the base (3) in the first direction (4).

4. The machine according to claim 3, also comprising two further protection barriers, each of which is fitted between a relative side face (8) of the base (3) and a relative side wall (12) of the protection barrier (10) to keep staff inside the access zone (13).

5. The machine according to any one of the claims from 2 to 4, wherein the rear wall (11) is substantially parallel to the rear face (6), the side walls (12) are substantially parallel to each other and to the side faces (8), and the front appendages (17) are substantially parallel to the front face (5).

6. The machine according to any one of the claims from 2 to 5, wherein the two front appendages (17) are arranged at a distance from each other, which is measured parallel to the first direction (4) and rounds down a length of the central area (14), which is also measured parallel to the first direction (4).

7. The machine according to any one of the preceding claims, wherein the two video cameras (18, 19) are fitted inside the protection barrier (10).

8. The machine according to any one of the preceding claims, wherein the overhead crane (20) projects from the base (3) inside the central area (14) in the second direction (7) .

9. The machine according to any one of the preceding claims, wherein the overhead crane (20) is movable along the base (3), between two end operating positions, in each of which the overhead crane (20) projects inside a relative side area (15, 16).

10. The machine according to any one of the preceding claims and further comprising two operating stations (24, 25), each of which is provided with at least one said gripping device (26), and alternatively defines a transfer station to transfer the components (2) to/from the gripping device (26), and a processing station to process the components (2) by means of the operating head (23); the overhead crane (20) being movable along the base (3) between the two operating stations (24, 25).
